# EUROPEAN PATENT SPECIFICATION

(11) **EP 3 613 530 B1**
(45) Date of publication and mention of the grant of the patent: **15.06.2022**
(21) Application number: 18786998.7
(22) Date of filing: 09.04.2018
(51) Int. Cl.: B23K 9/127, B23K 9/12, B23K 9/173

(54) **ARC WELDING DEVICE AND ARC WELDING METHOD**
LICHTBOGENSCHWEISSVORRICHTUNG UND LICHTBOGENSCHWEISSVERFAHREN
DISPOSITIF DE SOUDAGE À L'ARC ET PROCÉDÉ DE SOUDAGE À L'ARC

(30) Priority: 20.04.2017 JP 2017083745
(43) Date of publication of application: 26.02.2020
(73) Proprietor: Daihen Corporation, Osaka-shi, Osaka 532-8512 (JP)
(72) Inventor: BABA, Hayato, Osaka-shi Osaka 532-8512 (JP)
(74) Representative: Cabinet Beaumont
(86) International application number: PCT/JP2018/014890
(87) International publication number: WO 2018/193896

(56) References cited:
- JP-A- H04 228 262
- JP-A- 2002 239 732
- JP-A- 2005 144 458
- JP-A- 2005 271 064
- JP-A- 2010 089 149
- JP-A- 2010 089 149
- JP-A- 2010 120 042
- US-A1- 2009 230 106

## Description

### [Technical Field]

The present invention relates to an arc welding device and an arc welding method according to the preamble of claims 1 and 7 respectively (see for example US 2009/230106 A1) .

### [Background Art]

Welding methods include a consumable electrode type gas shield arc welding method. The gas shield arc welding method is a method in which an arc is generated between a welding wire fed to a region to be welded of a base metal and the base metal, and the base metal is welded by the heat of the arc. The method is particularly for welding with inactive gas injected around the region to be welded in order to protect the base metal heated to high temperature from oxidation. For a thin plate having a thickness of approximately 5 mm, a butt joint is employed to weld a base metal with one welding pass.

For a thick plate of 9-30 mm in thickness, however, the conventional arc welding device cannot weld a base metal with one welding pass. Thus, a multi-layer welding in which welding operation is repeatedly performed multiple times is used to weld thick sheets of metal. The multi-layer welding, however, involves a problem of increase in the number of process steps for welding. Furthermore, the amount of heat input is increased to thereby deform the base metal and make the welded section brittle.

Inventors of the present application devote themselves to study hard in order to solve such problems and finally gain findings that welding thick sheets of metal with one welding pass can be achieved by feeding a welding wire at a high speed and supplying the welding wire with large current, as compared with a general arc welding device. Specifically, a welding wire is fed at a speed of about 5-100 m/min. and is supplied with large current equal to or larger than 300 A, to thereby achieve welding of thick sheets of metal with one welding pass. When a welding wire is fed at a high speed and is supplied with large current, a recessed molten part is formed on the base metal by the heat of an arc. The tip end portion of the welding wire progresses into the space surrounded by the molten part. The tip end portion of the welding wire progresses into the depth beyond the surface of the base metal to thereby allow the molten part to penetrate to the reverse side in the direction of thickness of the base metal, which enables welding with one welding pass. An arc formed between the tip end portion of the welding wire progressing into the space surrounded by a molten part and a base metal or the molten part will appropriately be called a buried arc below. Furthermore, a state where the tip end portion of the welding wire goes into the space surrounded by the molten part is called a buried state whereas a state where the tip end portion of the welding wire goes out of the above-described space is called a non-buried state.

Meanwhile, in weaving welding, employed is an arc sensor technique (Patent Document 1, for example) in which a welding torch is woven in a groove of a base metal, and the position of the tip end portion of the welding wire relative to the groove is detected from the variation of the welding current, which enables correction of the position of the welding torch. Weaving of the welding torch allows the tip end portion of the welding wire to reciprocate across the groove of the base metal, and welding current is varied depending on the change of the arc length. The arc sensor detects the variation of the welding current caused by weaving and detects the amount of the offset of the central position for welding from the groove of the base metal. More specifically, a difference value between an integration value of the welding current obtained when the welding wire is deflected to the right from the groove by weaving and an integration value of the welding current obtained when the welding wire is deflected to the left by weaving is calculated to thereby detect the amount of the offset. If the central position for welding and the position of the groove are aligned with each other, the difference value is less than a threshold while if the central position for welding is offset from the position of the groove, the difference value is equal to or more than the threshold. A welding robot corrects the position of the welding torch based on the detected amount of the offset.

### [Prior Art Document]

### [Patent Document]

[Patent Document 1] Japanese Patent Application Laid-Open No. 2010-120042

### [Summary of Invention]

### [Problems to be Solved by Invention]

In the weaving welding using a buried arc, however, the tip end portion of the welding wire is surrounded by the molten part, which prevents the position of the welding wire relative to the groove from being reflected on welding current and hinders accurate correction of the position of the welding torch.

To solve the above problems, it is an object of the present invention to provide an arc welding device and an arc welding method capable of correcting the position of the welding torch by using an arc sensor even in the buried arc welding.

### [Means for Solving Problems]

An arc welding device according to the present invention is defined in claim 1, and is a consumable electrode type arc welding device that comprises a welding power source for supplying power between a welding wire fed to a welding torch and a base metal with a groove and a welding robot for moving and weaving the welding torch along the groove and that forms an arc between a tip end portion of the welding wire and the base metal by the supplied power and causes the tip end portion of the welding wire to progress into a space surrounded by a recessed molten part formed on the base metal to weld the base metal, comprises: a transition control unit that makes a temporary transition to a non-buried state where the tip end portion of the welding wire does not progress into the space for a predetermined time period that allows the tip end portion of the welding wire to traverse the groove by weaving of the welding torch; an acquisition unit that acquires, from the arc sensor for detecting an amount of offset of a central position for welding from a position of the groove based on welding current flowing from the welding wire to the base metal, a detection result of the amount of the offset at least in the non-buried state; and a correction control unit that corrects a position of the welding torch relative to the groove based on the detection result by the arc sensor in the non-buried state.

According to the present embodiment, in the buried arc welding, the transition control unit makes a temporary transition from a buried state where the tip end portion of the welding wire progresses into the molten part to the non-buried state. In the non-buried state, the positional relationship between the groove of the base metal and the tip end of the welding wire is reflected as variation of the welding current, which allows the arc sensor to detect the amount of offset of the central position for welding from the position of the groove of the base metal. The acquisition unit acquires a detection result of the amount of the offset of the central position for welding from the groove in the non-buried state from the arc sensor, and the correction control unit corrects the position of the welding torch relative to the groove of the base metal based on the detection result.

Accordingly, it is possible to correct the position of the welding torch using the arc sensor even in the buried arc welding.

In the arc welding device according to an embodiment of the present invention, it is preferable that a transition to the non-buried state is made by raising set voltage of the welding power source.

By raising the set voltage of the welding power source, a temporary transition from the buried state to the non-buried state can be made, so that the position of the welding torch can accurately be corrected using the arc sensor even in the buried arc welding.

In the arc welding device according to an embodiment of the present invention, it is preferable that a transition to the non-buried state is made by moving the welding torch in a direction in which the welding torch is away from the base metal.

By moving the welding torch in a direction away from the base metal, a temporary transition from the buried state to the non-buried state can be made, so that the position of the welding torch can accurately be corrected using the arc sensor even in the buried arc welding.

In the arc welding device according to an embodiment of the present invention, it is preferable that a transition to the non-buried state is made by varying a moving speed of the welding torch moving along the groove.

By accelerating the moving speed of the welding torch moving along the groove, a temporary transition from the buried state to the non-buried state can be made, so that the position of the welding torch can accurately be corrected using the arc sensor even in the buried arc welding.

In the arc welding device according to an embodiment of the present invention, it is preferable that a transition to the non-buried state is made by varying a feed speed of the welding wire.

By decelerating the feed speed of the welding wire relative to the melting speed of the welding wire, a temporary transition from the buried state to the non-buried state can be made, so that the position of the welding torch can accurately be corrected using the arc sensor even in the buried arc welding.

In the arc welding device according to an embodiment of the present invention, it is preferable that a position of the welding torch relative to the groove is corrected during a period of a transition to the non-buried state based on a detection result by the arc sensor, and a position of the welding torch is not corrected during a period other than the non-buried state.

The position of the welding torch is corrected using the arc sensor in the non-buried state while the position of the welding torch is not corrected using the arc sensor in the buried state where the amount of the offset is likely to be detected inaccurately.

Thus, the position of the welding torch can be corrected more accurately than when the position of the welding torch is constantly corrected.

An arc welding method according to the present invention is defined in claim 7, and is an arc welding method controlling operation of a consumable electrode type arc welding device that comprises a welding power source for supplying power between a welding wire fed to a welding torch and a base metal with a groove and a welding robot for moving and weaving the welding torch along the groove, and that forms an arc between a tip end portion of the welding wire and the base metal by the supplied power and causes the tip end portion of the welding wire to progress into a space surrounded by a recessed molten part formed on the base metal to weld the base metal, comprises: making a temporary transition to a non-buried state where the tip end portion of the welding wire does not progress into the space for a predetermined time period that allows the tip end portion of the welding wire to traverse the groove by weaving of the welding torch; acquiring, from an arc sensor for detecting an amount of offset of a central position for welding from a position of the groove based on welding current flowing from the welding wire to the base metal, a detection result of the amount of the offset at least in the non-buried state; and correcting a position of the welding torch relative to the groove based on the detection result by the arc sensor in the non-buried state.

According to the arc welding method of the present invention, it is possible to accurately correct the position of the welding torch using an arc sensor even in the buried arc welding.

### [Effect of Invention]

According to the present invention, the position of the welding torch can be corrected using an arc sensor even in the buried arc welding.

### [Brief Description of Drawings]

FIG. 1 is a schematic view illustrating one configurational example of an arc welding device according to Embodiment 1.
FIG. 2 is a schematic view illustrating one configurational example of a welding power source.
FIG. 3 is a schematic view illustrating one configurational example of an arc sensor.
FIG. 4 is a block diagram illustrating one configurational example of a control device.
FIG. 5 is a flowchart of a procedure of performing buried arc welding and correction of the position of a welding torch according to Embodiment 1.
FIG. 6 is a perspective view illustrating a motion of weaving welding.
FIG. 7 is a timing chart indicating a transition to a non-buried state by temporarily raising set voltage.
FIG. 8 is a schematic view illustrating a weaving path and positions for a buried state and a non-buried state.
FIG. 9A is a cross-sectional view illustrating the buried state and the non-buried state.
FIG. 9B is a cross-sectional view illustrating the buried state and the non-buried state.
FIG. 10A is a side cross-sectional view illustrating a transition between the buried state and the non-buried state caused by varying set voltage in a process of buried arc welding.
FIG. 10B is a side cross-sectional view illustrating a transition between the buried state and the non-buried state caused by varying set voltage in the process of the buried arc welding.
FIG. 10C is a side cross-sectional view illustrating a transition between the buried state and the non-buried state caused by varying set voltage in the process of the buried arc welding.
FIG. 11A is a side cross-sectional view illustrating a transition between the buried state and the non-buried state caused by varying the height of the welding torch in a process of the buried arc welding.
FIG. 11B is a side cross-sectional view illustrating a transition between the buried state and the non-buried state caused by varying the height of the welding torch in the process of the buried arc welding.
FIG. 11C is a side cross-sectional view illustrating a transition between the buried state and the non-buried state caused by varying the height of the welding torch in the process of the buried arc welding.
FIG. 12A is a side cross-sectional view illustrating a transition between the buried state and the non-buried state caused by varying the moving speed of the welding torch in a process of the buried arc welding.
FIG. 12B is a side cross-sectional view illustrating a transition between the buried state and the non-buried state caused by varying the moving speed of the welding torch in the process of the buried arc welding.
FIG. 12C is a side cross-sectional view illustrating a transition between the buried state and the non-buried state caused by varying the moving speed of the welding torch in the process of the buried arc welding.
FIG. 13 is a flowchart of a procedure of performing buried arc welding and correction of the position of the welding torch according to Embodiment 2.
FIG. 14 is a flowchart of the procedure of performing buried arc welding and correction of the position of the welding torch according to Embodiment 2.

### [Mode for Carrying Out Invention]

The present invention will be described below with reference to the drawings depicting embodiments thereof.

### Embodiment 1

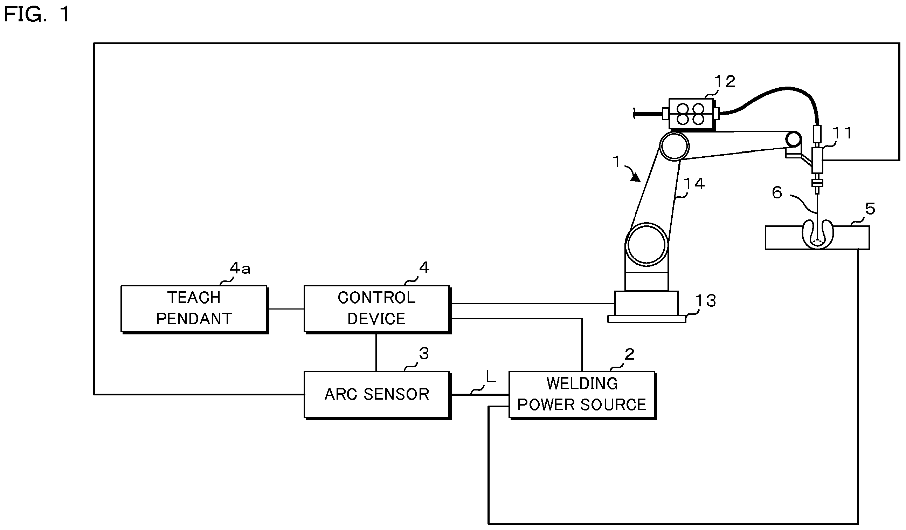

FIG. 1 is a block diagram illustrating one configurational example of an arc welding device according to Embodiment 1. The arc welding device according to Embodiment 1 is a consumable electrode type gas shield arc welding machine capable of performing buried arc welding with large current of 300 A or larger and includes a welding robot 1 attached with a welding torch 11 and a wire feed unit 12, a welding power source 2, an arc sensor 3 and a control device 4. The control device 4 is connected to a teach pendant 4a. The control device 4 outputs a motion control signal to the welding robot 1 based on an operation signal output from the teach pendant 4a and outputs a welding control signal to the welding power source 2 at a predetermined timing to thereby control the motion of the welding robot 1 and the welding power source 2. Especially, the arc welding method according to Embodiment 1 is capable of accurately correcting the position of the welding torch 11 using the arc sensor 3 even in the buried arc welding.

The welding robot 1 is provided with a base portion 13 fixed at an appropriate position on a floor surface. The base portion 13 is rotatably coupled with multiple arms 14 via shaft portions, and at the tip end portion of the arm 14 coupled at the distal end, a welding torch 11 is held. At the coupled portion between the arms 14, a servomotor is provided, and each arm 14 is rotated about the shaft portion by a rotational driving force of the servomotor. The rotation of the servomotor is controlled by the control device 4. The control device 4 can move the welding torch 11 relative to a base metal 5 in the upper, lower, back, forth, right and left directions by rotating each of the arms 14. At the coupled portion between the arms 14, an encoder for outputting a signal indicative of a rotating position of the arm 14 to the control device 4 is provided, and the control device 4 recognizes the position of the welding torch 11 based on the signal output from the encoder. Moreover, the control device 4 communicates with the welding power source 2 to control the feed of a welding wire 6 and the supply of welding current Iw.

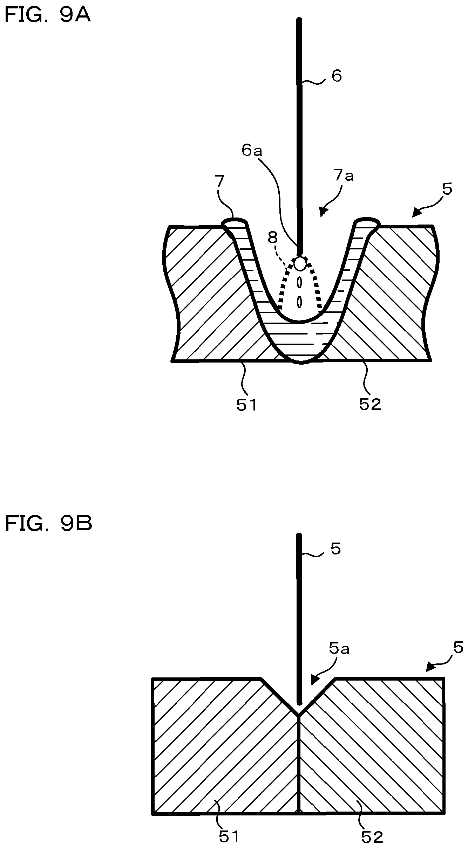

The welding torch 11 is made of a conducting material such as a copper alloy or the like, and guides the welding wire 6 to a to-be-welded section of the base metal 5 and has a cylindrical contact tip to supply welding current Iw required for forming arc 8 (see FIG. 9A). The contact tip is in contact with the welding wire 6 inserted therethrogh and supplies welding current Iw to the welding wire 6. Furthermore, the welding torch 11 has a hollow cylindrical shape so as to enclose the contact tip and has a nozzle ejecting shield gas to the to-be-welded section. The shield gas is to protect the base metal 5 and the welding wire 6 that are molten by an arc 8 from oxidization. The shield gas is inert gas, for example, carbonic acid gas, a mixture of carbonic acid gas and argon gas, argon or the like.

The welding wire 6 is, for example, a solid wire of 0.9 mm to 1.6 mm in diameter and functions as a consumable electrode. The welding wire 6 is a pack wire stored in a spirally wound manner in a pail pack or a reel wire wound around a wire reel.

The wire feed unit 12 is provided with feed rollers for feeding the welding wire 6 to the welding torch 11 and a motor for rotating the feed rollers. The wire feed unit 12 draws the welding wire 6 from a wire feed source such as a wire reel or the like by rotating the feed rollers and feeds the drawn welding wire 6 to the welding torch 11. Note that such a feed system of the welding wire 6 is mere one example, and any feed system may be employed.

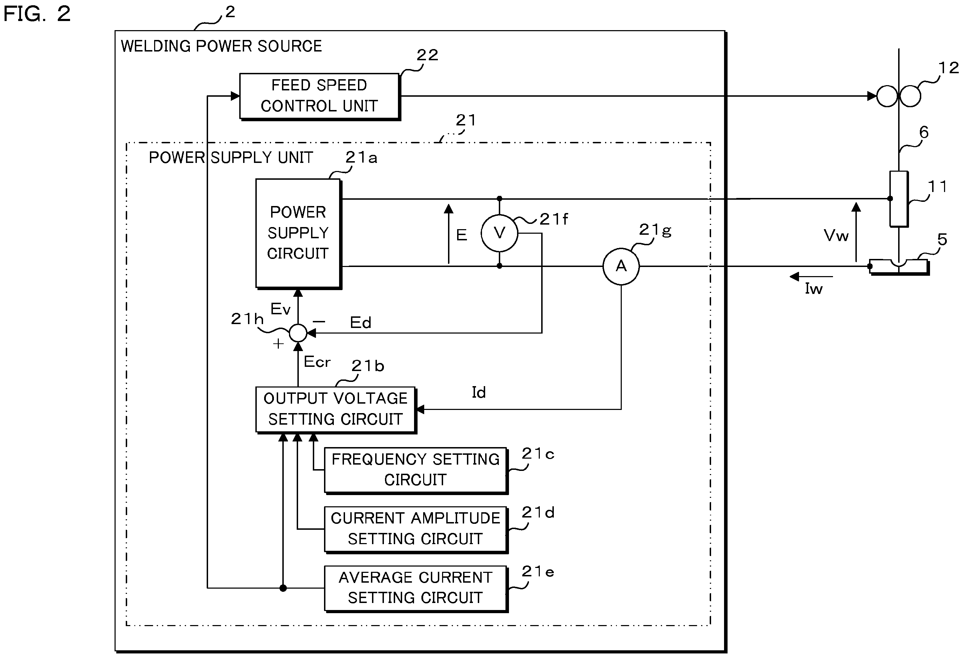

FIG. 2 is a schematic view illustrating one configurational example of the welding power source 2. The welding power source 2 includes a power source unit 21 that is connected to the contact tip of the welding torch 11 and the base metal 5 through power supply cables and that supplies welding current Iw, and a feed speed control unit 22 that controls the feed speed of the welding wire 6. Note that the power supply unit 21 and the feed speed control unit 22 may separately be provided. The power supply unit 21 is a power source having constant-voltage characteristic and includes a power supply circuit 21a for outputting direct current (DC) that is subjected to PWM control, an output voltage setting circuit 21b, a frequency setting circuit 21c, a current amplitude setting circuit 21d, an average current setting circuit 21e, a voltage detection unit 21f, a current detection unit 21g and a comparator circuit 21h.

The voltage detection unit 21f detects welding voltage Vw and outputs a voltage value signal Ed indicating the detected voltage value to the comparator circuit 21h.

The current detection unit 21g detects welding current Iw that is supplied from the welding power source 2 through the welding torch 11 to the welding wire 6 to thereby flow through the arc 8, and outputs a current value signal Id indicating the detected current value to the output voltage setting circuit 21b, for example.

The frequency setting circuit 21c outputs to the output voltage setting circuit 21b a frequency setting signal for setting a frequency at which the welding voltage Vw and the welding current Iw flowing between the base metal 5 and the welding wire 6 are periodically varied.

The purpose of varying the welding voltage Vw and the welding current Iw is for accurately correcting the position of the welding torch 11 and stabilizing the molten metal in the arc welding method according to Embodiment 1. In Embodiment 1, it is assumed that the variation of the setting voltage E for correcting the position of the welding torch 11 is controlled by the control device 4 on each occasion, and the frequency set by the frequency setting circuit 21c is for stabilizing the molten metal. More specifically, the frequency setting circuit 21c may be configured to output a frequency setting signal indicating frequencies of 10 Hz to 1000 Hz, preferably, 50 Hz to 300 Hz, more preferably, 80 Hz to 200 Hz. Note that varying the welding current Iw itself is not an indispensable welding condition for implementing the buried arc welding.

It is noted that in order to implement the arc welding method according to Embodiment 1, that is, to correct the position of the welding torch 11, the frequency setting circuit 21c may be configured to output a frequency setting signal to the output voltage setting circuit 21b such that the set voltage E rises at a cycle of several times or a dozen times the weaving cycle, preferably, during a period longer than a cycle of the weaving period.

The current amplitude setting circuit 21d outputs an amplitude setting signal for setting the amplitude of welding current Iw periodically varying to the output voltage setting circuit 21b. In the case of implementing the arc welding method according to Embodiment 1, the current amplitude setting circuit 21d outputs an amplitude setting signal indicating a current amplitude of 50 A or more, preferably, 100 A to 500 A, more preferably, 200 A to 400 A.

The average current setting circuit 21e outputs an average current setting signal for setting average current of welding current Iw periodically varying to the output voltage setting circuit 21b and the feed speed control unit 22. In the case of implementing the arc welding method according to Embodiment 1, the average current setting circuit 21e outputs an average current setting signal indicating average current of 300 A or more, preferably, 300 A to 1000 A, more preferably, 500 A to 800 A.

The output voltage setting circuit 21b generates an output voltage setting signal Ecr indicating target voltage with any waveform such as a square wave or a triangular wave such that the welding current Iw achieves a target frequency, a target current amplitude and target average current based on the current value signal Id, the frequency setting signal, the amplitude setting signal, the average current setting signal output from the respective devices, and outputs the generated output voltage setting signal Ecr to the comparator circuit 21h.

The comparator circuit 21h compares the voltage value signal Ed output from the voltage detection unit 21f and the output voltage setting signal Ecr output from the output voltage setting circuit 21b, and outputs a difference signal Ev indicating the difference to the power supply circuit 21a.

The power supply circuit 21a has an AC-DC converter for performing AC-DC conversion on utility alternating current, an inverter circuit for converting the direct current after the AC-DC conversion to required alternating current by switching, a rectifier circuit for rectifying the converted alternating current and so on. The power supply circuit 21a performs PWM control on the inverter according to the difference signal Ev output from the comparator circuit 21h and outputs the voltage to the welding wire 6.
Hence, the welding voltage Vw periodically varying is applied between the base metal 5 and the welding wire 6 to thereby cause welding current Iw to flow therebetween. Note that the welding power source 2 is configured to receive an input of a welding control signal from the control device 4 through a control communication line, and the power supply unit 21 causes the power supply circuit 21a to start to supply welding current Iw based on the welding control signal.

The feed speed control unit 22 controls the feed of the welding wire 6 by the wire feed unit 12 based on an average current setting signal. In the case of implementing the arc welding method according to Embodiment 1, control of the feed of the welding wire 6 at about 5 m to 100 m/min. is preferable.

Note that the power supply unit 21 of the power supply source 2 has a constant-voltage characteristic. The power supply unit 21, for example, has an external characteristic such that decrease of welding voltage Vw relative to increase of the welding current Iw of 100A is 2 V to 20 V. Such a setting of the external characteristic of the power supply unit 21 facilitates the maintenance of the buried arc state.

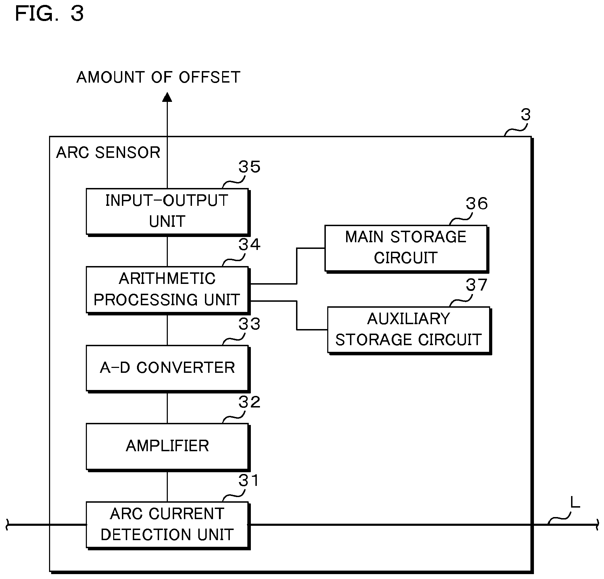

FIG. 3 is a schematic view illustrating one configurational example of the arc sensor 3. The arc sensor 3 includes an arc current detection unit 31, an amplifier 32, an A-D converter 33, an arithmetic processing unit 34, an input-output unit 35, a main storage circuit 36, an auxiliary storage circuit 37, etc.

The arc current detection unit 31 is attached to a power supply cable L on the torch side and detects welding current Iw.

More specifically, the arc current detection unit 31 includes a magnetic core for enclosing the magnetic cable L on the torch side and a hall element for detecting a magnetic field occurring at the magnetic core caused by the welding current Iw flowing in the magnetic cable L on the torch side and outputting a signal in correspondence with the magnitude and the direction of the current, and so on. The amplifier 32 amplifies the signal output from the arc current detection unit 31 and outputs the amplified signal to the A-D converter 33. The A-D converter 33 converts the analog signal output from the amplifier 32 into a digital signal and outputs the digitalized welding current Iw to the arithmetic processing unit 34.

The input-output unit 35 is an interface through which a signal is input and output to and from the control device 4. The main storage circuit 36 is a storage element for temporarily storing various data generated by arithmetic processing. The auxiliary storage circuit 37 is a ROM such as an EEPROM or the like and stores weaving information indicating welding current Iw detected by the arc current detection unit 31, a weaving cycle input to the input-output unit 35 from the control device 4, amplitude, a phase, etc.

The arithmetic processing unit 34 acquires the welding current Iw output from the A-D converter 33 and the weaving information input through the input-output unit 35 and detects the amount of the offset of the tip end portion 6a of the welding wire 6 from the groove 5a of the base metal 5 based on the acquired welding current Iw and weaving information. In other words, the arithmetic processing unit 34 calculates the amount of the offset of the central position for welding from the groove 5a.

More specifically, the arithmetic processing unit 34 determines the direction in which the welding torch 11 is deflected based on the weaving information and calculates an integration value of the welding current Iw when the welding torch 11 is deflected to the right and an integration value of the welding current Iw when the welding torch 11 is deflected to the left, with respect to the direction of the progress of the welding torch 11.

The arithmetic processing unit 34 then calculates a difference value between the calculated integration values, converts the difference value to the amount of the offset and outputs it to the welding robot 1 through the input-output unit 35.

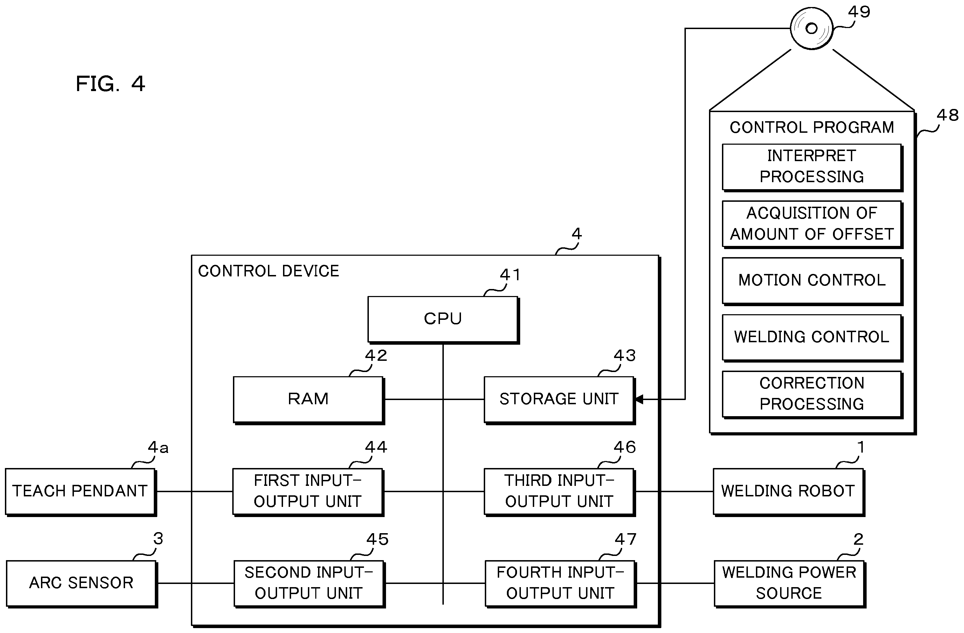

FIG. 4 is a block diagram illustrating one configurational example of the control device 4. The control device 4 includes a CPU 41 to which a RAM 42 for storing various data generated by arithmetic processing, a nonvolatile storage unit 43 for storing a control program 48 and first to fourth input-output units 44, 45, 46 and 47 are connected. The control device 4 is made up of a computer. The control program 48 is a computer program to be executed by the CPU 41 for accurately correcting the position of the welding torch 11 using the arc sensor 3 in the buried arc welding.

Note that the control program 48 according to Embodiment 1 may be computer-readably recorded in a recording medium 49. The storage unit 43 stores the control program 48 read out from the recording medium 49 by a reading device (not illustrated). The recording medium 49 is an optical disk such as a compact disc (CD)-ROM, a digital versatile disk (DVD)-ROM, a Blu-ray (registered trademark) (BD) disk or the like, a magnetic disk such as a flexible disk, a hard disk or the like, a magneto-optical disk, a semiconductor memory, or the like. Alternatively, the control program 48 according to Embodiment 1 may be downloaded from an external computer (not illustrated) connected to a communication network (not illustrated) and be stored in the storage unit 43.

The teach pendant 4a is a portable teaching operation device and is connected to the first input-output unit 44. The operator inputs multiple teaching points each indicating the position and the orientation of the welding torch 11 using the teach pendant 4a. The teaching points include, for example, a welding start point, a welding end point, an intermediate point, and so on. The CPU 41 acquires the teaching points by the first input-output unit 44 to thereby create a welding program and stores the created welding program in the storage unit 43.

The second input-output unit 45 is connected to the arc sensor 3 to thereby allow the CPU 41 to acquire the amount of offset detected by the arc sensor 3. The CPU 41 can grasp the amount of displacement between the position of the groove 5a of the base metal 5 and the central position for welding, that is, the amount of displacement of the central point for weaving from the position of the groove 5a, based on the acquired amount of offset.

The third input-output unit 46 and the fourth input-output unit 47 are connected to the welding robot 1 and the welding power source 2, respectively. The CPU 41 interprets the welding program stored in the storage unit 43 to generate a motion control signal for moving the welding robot 1 by driving the servomotor of the welding robot 1 and outputs the generated motion control signal to the welding robot 1. The welding robot 1, which has received the motion control signal, moves the welding torch 11 along the teaching line defined by the multiple teaching points. Especially, in Embodiment 1, the welding robot 1 performs weaving motion such that the welding torch 11 reciprocates so as to repeatedly traverse the teaching line.

Furthermore, the CPU 41 generates a welding control signal indicating a welding start instruction or a welding stop instruction, set voltage E, welding current Iw or the like and outputs the generated welding control signal to the welding power source 2.

The welding power source 2, which has received the welding control signal, supplies power between the welding wire 6 and the base metal 5 at a required set voltage E and current.

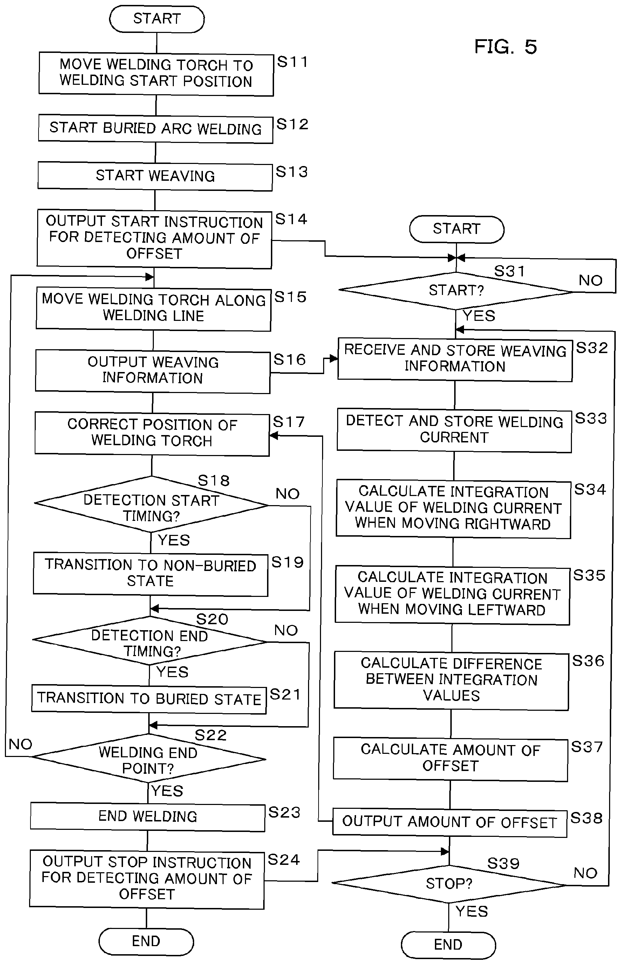

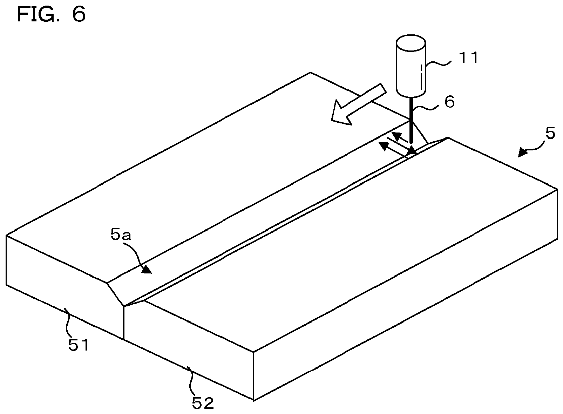

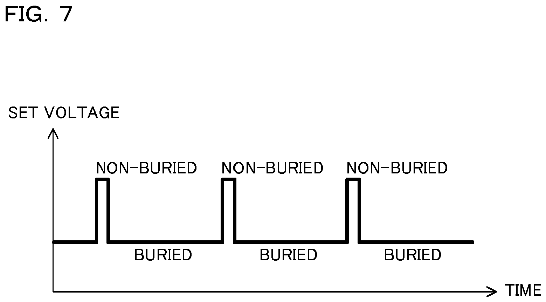

FIG. 5 is a flowchart of a procedure of buried arc welding and correction of the position of the welding torch 11 according to Embodiment 1. FIG. 6 is a perspective view illustrating a motion of weaving welding. FIG. 7 is a timing chart indicating a transition to a non-buried state caused by temporarily increasing set voltage E. Before starting arc welding, a first base metal 51 and a second base metal 52 are first arranged to butt against one another to form a Y-shaped groove 5a as illustrated in FIG. 6.

After the base metal 5 is prepared, the control device 4, which has received welding start operation, outputs a motion control signal to the welding robot 1 to thereby move the welding torch 11 to a welding start position (step S11) and outputs a welding control signal to the welding power source 2 to thereby start buried arc welding (step S12). The control device 4 further causes the welding robot 1 to start weaving as denoted by solid arrows in FIG. 6 (step S13).

Then, the control device 4 outputs a start instruction for detecting the amount of offset of the welding wire 6 to the arc sensor 3 (step S14) and moves the welding torch 11 along a welding line as illustrated in a hollow arrow in FIG. 6 (step S15). Moreover, the control device 4 outputs weaving information to the arc sensor 3 (step S16). The weaving information includes information indicating at least a weaving position or a phase.

The arc sensor 3, which has received the start instruction, detects offset of the central position for welding from the groove 5a of the base metal 5 and outputs the amount of offset indicating the magnitude and the direction of the offset to the control device 4. The processing procedure on the arc sensor 3 side will be described below.

The arc sensor 3 monitors a signal output from the control device 4 and determines whether or not a start instruction for detecting the amount of offset is received (step S31). When determining that the start instruction is not received (step S31: NO), the arc sensor 3 returns the processing to step S31 to be held standby. If determining that the start instruction is received (step S31: YES), the arc sensor 3 executes the following processing of detecting the amount of the offset of the welding torch 11 from the groove 5a until it receives a stop instruction for detecting the amount of the offset.

The arc sensor 3 receives weaving information output from the control device 4 and stores the information (step S32). Furthermore, the arc sensor 3 detects welding current Iw by the arc current detection unit 31 and stores the detected welding current Iw (step S33). Then, the arc sensor 3 calculates an integration value of the welding current Iw detected when the welding torch 11 moves to the right with respect to the welding direction from the teaching points being the central position for welding (step S34). The arc sensor 3 further calculates an integration value of the welding current Iw detected when the welding torch 11 moves to the left from the teaching points (step S35). Next, the arc sensor 3 calculates the difference between the integration values of the welding current Iw (step S36) and calculates the amount of the offset of the welding torch 11 based on the difference value (step S37). The arc sensor 3 outputs the calculated amount of the offset to the control device 4 (step S38).

The control device 4 acquires the amount of the offset output from the arc sensor 3 and corrects the position of the welding torch 11 based on the acquired amount of the offset (step S17). The position correction processing of the welding torch 11 is constantly performed during the buried arc welding. The amount of the offset detected in the buried sate is normally a value approximate to zero, which causes no problem even if the position of the welding torch 11 is corrected in the buried state.

Next, the control device 4 determines whether or not a predetermined detection start timing for making a transition to a state suitable for detecting the amount of the offset is reached (step S18). The detection start timing is a timing arriving at a cycle several times or a dozen times the weaving cycle, for example. If determining that the predetermined detection timing is reached (step S18: YES), the control device 4 outputs a welding control signal to the welding power source 2 to thereby raise the setting voltage E for welding, making a transition from the buried state to the non-buried state (step S19). When the set voltage E rises, melting of the welding wire 6 progresses to make a transition from the buried state to the non-buried state.

If determining that the detection start timing is not reached (step S18: NO), or if the processing at step S19 is completed, the control device 4 determines whether or not a predetermined detection end timing is reached (step S20). The detection end timing is a time point after a predetermined time corresponding to one cycle of weaving or several cycles of weaving has elapsed from the detection start timing. If determining that the detection end timing is reached (step S20: YES), the control device 4 outputs a welding control signal to the welding power source 2 to thereby reduce the set voltage E for welding to the original voltage, making a transition from the non-buried state to the buried state (step S21).

By executing the processing at step S18 and step S19, the control device 4 periodically makes a transition to the non-buried state during the execution of the buried arc welding as illustrated in FIG. 7. Each ten times of weaving, a transition to the non-buried state can be maintained for only one cycle of weaving, for example. In the non-buried state, the amount of the offset of the welding torch 11 from the groove 5a can accurately be detected. That is, a transition is made to a state where the amount of the offset of the welding torch 11 can regularly be corrected with accuracy.

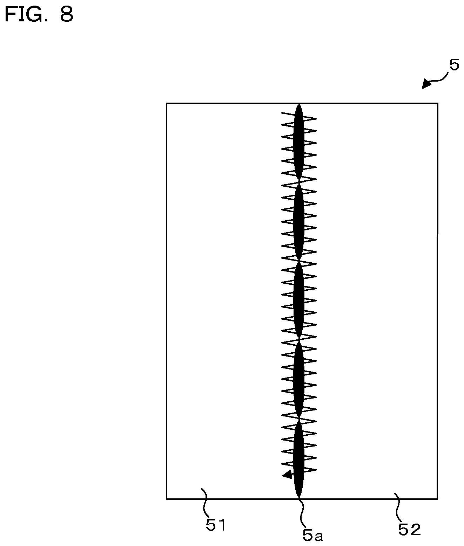

FIG. 8 is a schematic view illustrating a weaving path and positions for the buried state and the non-buried state. In FIG. 8, the solid line denotes a weaving path. In FIG. 8, elongated oval areas filled with black that are periodically drawn along the groove 5a represent parts where welding is performed after a transition to the buried state while areas where the elongated oval areas are discontinuous represent parts where welding is performed after a transition to the non-buried state. Note that the elongated oval areas do not represent parts where beads are formed. The weaving path traverses the groove 5a at each position where welding is performed in the non-buried state which enables detection of the central position for welding relative to the groove 5a.

FIG. 9A and FIG. 9B are cross-sectional views illustrating the buried state and the non-buried state, respectively. FIG. 9A depicts the buried state while FIG. 9B depicts the non-buried state. If buried arc welding is performed, a recessed molten part 7 made of molten part of the base metal 5 and the welding wire 6 that are molten by heat of the arc 8 occurring between the tip end portion 6a of the welding wire 6 and the base metal 5 is formed on the base metal 5, and the tip end portion 6a of the welding wire 6 goes into a space 7a surrounded by the molten part 7 as illustrated in FIG. 9A. The welding wire 6 is surrounded by the molten part 7, so that even if the welding torch 11 weaves, the position of the welding wire 6 relative to the groove 5a is not reflected as a variation of the welding current Iw.

Meanwhile, if the set voltage E rises to make a transition from the buried state, the transition to a state where the position of the welding wire 6 relative to the groove 5a is reflected as variation of the welding current Iw is made as illustrated FIG. 9B.

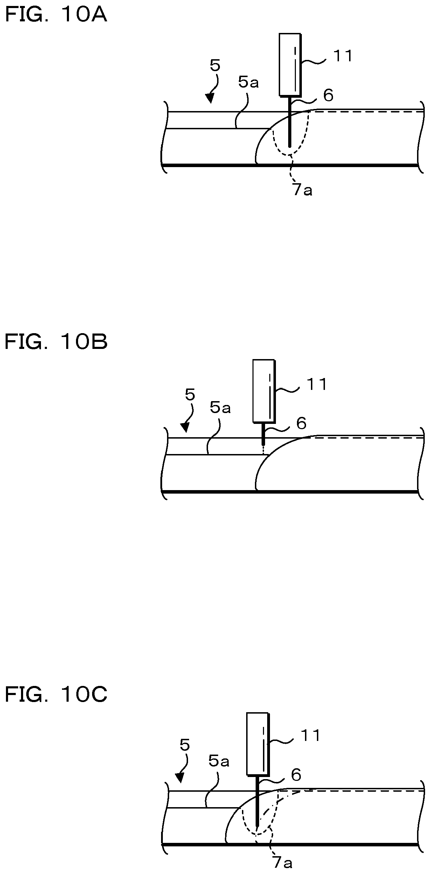

FIG. 10A, FIG. 10B and FIG. 10C are each a side cross-sectional view illustrating a transition between the buried state and the non-buried state caused by varying set voltage E in the buried arc welding process. FIG. 10A depicts the buried state, FIG. 10B depicts a state where a transition to the non-buried state is made, and FIG. 10C depicts a state where a transition to the buried state is made again. Even if the set voltage E rises to make a transition to the non-buried state, a part where the buried arc welding is not temporarily performed is created as illustrated in FIG. 10B due to the continuous movement of the welding torch 11, which enables a transition from the buried state. However, when the buried arc welding is restarted, the molten part 7 is formed so as to be spread as illustrated in FIG. 10C, so that a bead is formed in the same manner as that formed when buried arc welding is continuously performed. That is, the molten part 7 also spreads to the part where no molten part 7 is temporarily formed, and the buried arc welding is restarted.

Returning to FIG. 5, the processing after step S20 will be described. If determining that the detection end timing is not reached at step S20 (step S20: NO), or if the processing at step S21 is completed, the control device 4 determines whether or not the welding torch 11 reaches a welding end point (step S22). If determining that the welding torch 11 does not reach the welding end point (step S22: NO), the control device 4 returns the processing to step S15. If determining that the welding torch 11 reaches the welding end point (step S22: YES), the control device 4 stops the welding robot 1 and the welding power source 2 to thereby end the welding (step S23). Next, the control device 4 outputs a stop instruction for detecting the amount of the offset to the arc sensor 3 (step S24) and ends the processing.

The arc sensor 3 that is detecting the amount of the offset monitors a signal output from the control device 4 and determines whether or not a stop instruction for detecting the amount of the offset is received (step S39). If determining that the stop instruction is not received (step S39: NO), the arc sensor 3 returns the processing to step S32. When determining that the stop instruction is received (step S39: YES), the processing concerning the detection of the amount of the offset is ended.

Examples of welding conditions that enables correction of the position of the welding torch 11 using the arc sensor 3 even in the buried arc welding are as follows. For example, it is preferable that welding is performed under the welding conditions that the thickness of the base metal 5 is 19 mm, the diameter of the welding wire 6 is 1. 4 mm, the feed speed of the welding wire 6 is 23 m/min., the welding current Iw is 600 A, the arc voltage is 48 V, the moving speed of the welding torch 11 along the welding line is about 30 cm/min., the weaving width, that is, the amplitude of weaving is ±3 mm and the weaving frequency is 0.5 to 3 Hz. The set voltage E for welding is raised up to 51 V at a cycle of once per ten reciprocations for weaving, making a transition to the non-buried state. Such a transition to the state where the position of the welding torch 11 is easily reflected on the welding current Iw makes it possible to improve the detection accuracy of the arc sensor 3 and to accurately correct the position of the welding torch 11.

The period of transition to the non-buried state is not limited to any particular period, though it is preferable that the period is set such that the period in which the buried state is maintained is longer than the period in which the non-buried state is maintained.

As described above, according to the control device 4, the arc welding device, the arc welding method and the control program 48 of Embodiment 1, the position of the welding torch 11 can accurately be corrected using the arc sensor 3 even in the buried arc welding. More specifically, by raising the set voltage E of the welding power source 2, a temporary transition from the buried state to the non-buried state is made, which makes it possible to accurately correct the position of the welding torch 11 using the arc sensor 3.

The present embodiment is configured to make a temporary transition to the non-buried state for a predetermined time period longer than one cycle of weaving, and thus the non-buried state continues for one weaving cycle or longer, which ensures that the tip end 6a of the welding wire 6 traverses the groove 5a of the base metal 5. Accordingly, the amount of the offset of the central position for welding from the groove 5a can surely be detected, which makes it possible to correct the position of the welding torch 11.

Note that in Embodiment 1, an example in which the control device 4 controls the set voltage E on each occasion is described, though the welding power source 2 may periodically vary the set voltage E according to an instruction from the control device 4. In other words, in order to implement the arc welding method according to Embodiment 1, that is, to correct the position of the welding torch 11, the frequency setting circuit 21c may be configured to output a frequency setting signal to the output voltage setting circuit 21b for a cycle of several times or a dozen times the weaving cycle, preferably, a period longer than a cycle of the weaving period such that the set voltage E rises.

In Embodiment 1, an example in which a transition from the buried state to the non-buried state is made by raising the set voltage E has been described. However, the method for making a transition to the non-buried state is not limited to a specific method, and various modifications can be made.

### Modification 1

Modification 1 is a configurational example in which a transition to the non-buried state can be made by moving the welding torch 11 in the direction away from the base metal 5.

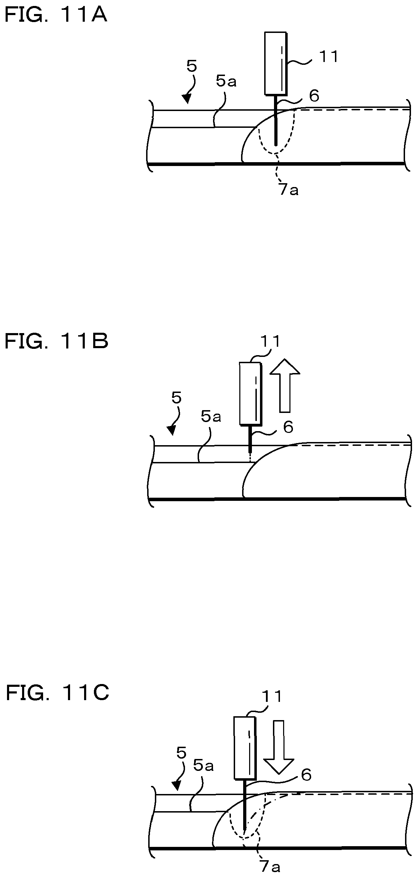

FIG. 11A, FIG. 11B and FIG. 11C are each a side cross-sectional view illustrating a transition between the buried state and the non-buried state caused by varying the height of the welding torch 11 in a buried arc welding process. FIG. 11A depicts the buried state, FIG. 11B depicts a state where a transition to the non-buried state is made, and FIG. 11C depicts a state where a transition to the buried state is made again. The control device 4 outputs a motion control signal to the welding robot 1 to thereby lift the welding torch 11, which enables a transition from the buried state depicted in FIG. 11A to the non-buried state depicted in FIG. 11B. Meanwhile, the control device 4 outputs a motion control signal to the welding robot 1 to thereby return the welding torch 11 to the original level, which enables restart of the buried arc welding as illustrated in FIG. 11C.

### Modification 2

Modification 2 is a configurational example in which a transition to the non-buried state is made by varying the moving speed of the welding torch 11 moving along a welding line.

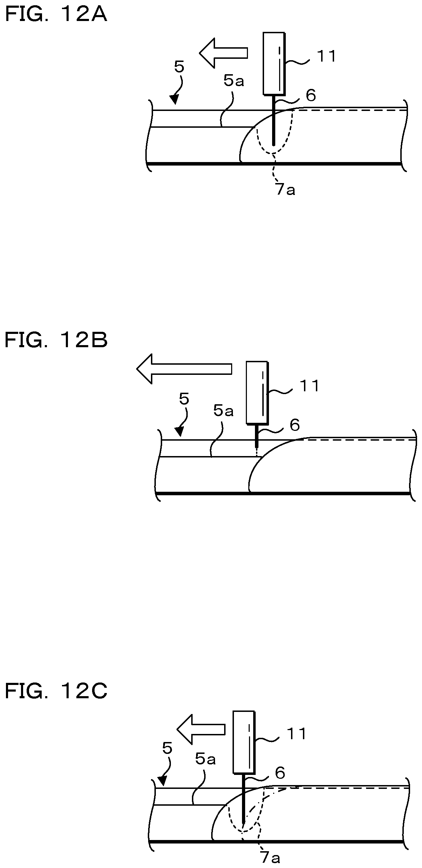

FIG. 12A, FIG. 12B and FIG. 12C are each a side cross-sectional view illustrating a transition between the buried state and the non-buried state by varying the moving speed of the welding torch 11 in a buried arc welding process.

FIG. 12A depicts the buried state, FIG. 12B depicts a state where a transition to the non-buried state is made, and FIG. 12C depicts a state where a transition to the buried state is made again. The control device 4 outputs a motion control signal to the welding robot 1 to thereby accelerate the welding torch 11 in a welding direction, which enables a transition from the buried state depicted in FIG. 12A to the non-buried state depicted in FIG. 12B. Meanwhile, the control device 4 outputs a motion control signal to the welding robot 1 to thereby decelerate the moving speed of the welding torch 11 to the original speed, which enables restart of the buried arc welding as depicted in FIG. 11C.

### Modification 3

Modification 3 is a configurational example in which a transition to the non-buried state is made by varying the feed speed of the welding wire 6 relative to the melting speed of the welding wire 6. The control device 4 outputs a welding control signal to the welding power source 2 to thereby decelerate the feed speed of the welding wire 6, which enables a transition from the non-buried state to the buried state. For example, by varying the welding current Iw, the feed speed of the welding wire 6 relative to the melting speed of the welding wire 6 can be decelerated. When the welding current Iw is increased to raise the melting speed of the welding wire 6, the welding wire 6 is lifted up from the welding part 7, making a transition to the non-buried state. Meanwhile, the control device 4 outputs a welding control signal to the welding power source 2 to thereby vary the feed speed of the welding wire 6 to the original speed, which enables restart of the buried arc welding.

### Embodiment 2

An arc welding device according to Embodiment 2 is different from that of Embodiment 1 in that the position of the welding torch 11 is corrected only when a transition to the non-buried state is made, and the difference will mainly be described below. Embodiment 2 is similar to Embodiment 1 in the configuration and working effect other than the difference, and thus the detailed description will not be made by applying similar reference symbols to the corresponding parts.

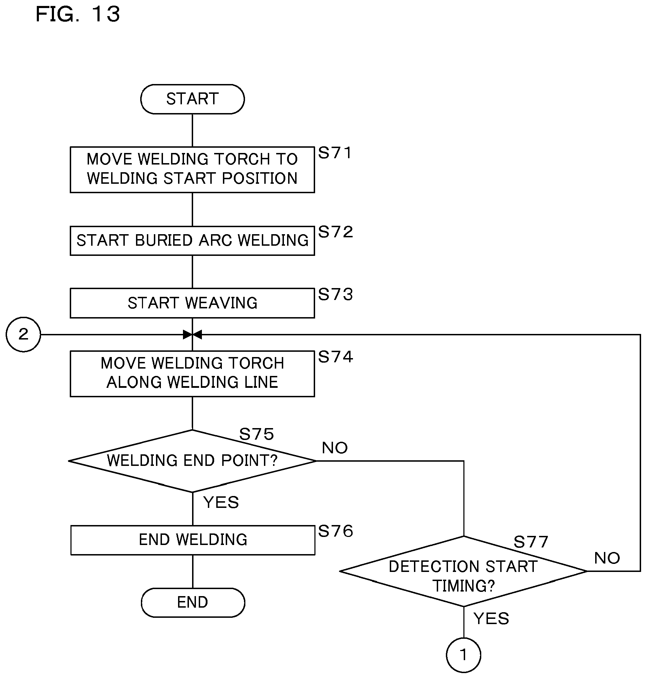

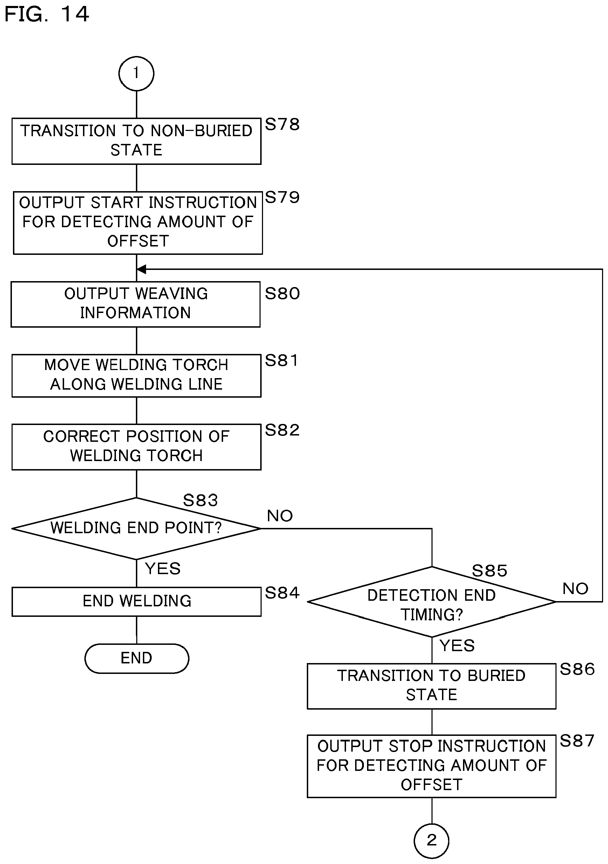

FIG. 13 and FIG. 14 are each a flowchart of a procedure of buried arc welding and correction of the position of the welding torch 11 according to Embodiment 2. The processing procedure on the arc sensor 3 side is similar to that in Embodiment 1, and thus the illustration thereof will not be made here. The control device 4 executes the processing similar to that at steps S11 to S13 in Embodiment 1 to thereby move the welding torch 11 to a welding start point (step S71), start buried arc welding (step S72) and start weaving (step S73). Then, the control device 4 moves the welding torch 11 along a welding line (step S74).

The control device 4 then determines whether or not the welding torch 11 reaches a welding end point (step S75). If determining that the welding torch 11 reaches the welding end point (step S75: YES), the control device 4 stops the welding robot 1 and the welding power source 2 to thereby end the welding (step S76). If determining that the welding torch 11 does not reach the welding end point (step S75: NO), the control device 4 determines whether or not a detection start timing is reached (step S77). If determining that the detection start timing is not reached (step S77: NO), the control device 4 returns the processing to step S74.

If determining that the detection start timing is reached (step S77: YES), the control device 4 outputs a welding control signal to the welding power source 2 to thereby raise the setting voltage E for welding, making a transition from the buried state to the non-buried state (step S78). Then, the control device 4 outputs a start instruction for detecting the amount of offset of the welding wire 6 to the arc sensor 3 (step S79) and outputs weaving information to the arc sensor 3 (step S80).

Next, the control device 4 moves the welding torch 11 along the welding line (step S81). The control device 4 then acquires the amount of the offset output from the arc sensor 3 in the non-buried state and corrects the position of the welding torch 11 based on the acquired amount of the offset (step S82).

Subsequently, the control device 4 determines whether or not the welding torch 11 reaches the welding end point (step S83). If determining that the welding torch 11 reaches the welding end point (step S83: YES), the control device 4 stops the welding robot 1 and the welding power source 2 to thereby end the welding (step S84). If determining that the welding torch 11 does not reach the welding end point (step S83: NO), the control device 4 determines whether or not a detection end timing is reached or not (step S85). If determining that the detection end timing is not reached (step S85: NO), the control device 4 returns the processing to step S80.

If determining that the detection end timing is reached (step S85: YES), the control device 4 outputs a welding control signal to the welding power source 2 to thereby reduce the set voltage E for welding to the original voltage, making a transition from the non-buried state to the buried state (step S86). The control device 4 then outputs to the arc sensor 3 a stop instruction for detecting the amount of the offset (step S87) and returns the processing to step S74.

Hence, according to the control device 4, the arc welding device, the arc welding method and the control program 48 of Embodiment 2, the position of the welding torch 11 is corrected using the arc sensor 3 in the non-buried state while the position of the welding torch 11 is not corrected using the arc sensor 3 in the buried state where the amount of the offset is likely to be inaccurately detected. Thus, a welding position can be corrected more accurately than when a welding position is constantly corrected.

Note that an example in which by raising the set voltage E, a transition from the buried state to the non-buried state is made has been described. However, the method of making a transition to the non-buried state is not limited to a specific method that has been described in the above-described modifications 1 to 3.

It is to be understood that the embodiments disclosed here are illustrative in all respects and not restrictive. The scope of the present invention is defined by the appended claims.

### [Description of Reference Numerals]

- 1: welding robot
- 2: welding power source
- 3: arc sensor
- 4: control device
- 4a: teach pendant
- 5: base metal
- 5a: groove
- 6: welding wire
- 6a: tip end portion
- 7: molten part
- 7a: space
- 8: arc
- 11: welding torch
- 12: wire feed unit
- 13: base portion
- 14: arm
- 21: power supply unit
- 21a: power supply circuit
- 21b: output voltage setting circuit
- 21c: frequency setting circuit
- 21d: current amplitude setting circuit
- 21e: average current setting circuit
- 21f: voltage detection unit
- 21g: current detection unit
- 21h: comparator circuit
- 22: feed speed control unit
- 31: arc current detection unit
- 32: amplifier
- 33: A-D converter
- 34: arithmetic processing unit
- 35: input-output unit
- 36: main storage circuit
- 37: auxiliary storage circuit
- 41: CPU
- 42: RAM
- 43: storage unit
- 44: first input-output unit
- 45: second input-output unit
- 46: third input-output unit
- 47: fourth input-output unit
- 48: control program
- 49: recording medium
- 51: first base metal
- 52: second base metal
- Vw: welding voltage
- Iw: welding current
- Ecr: output voltage setting signal
- Ed: voltage value signal
- Id: current value signal
- Ev: difference signal
- E: set voltage

## Claims

1. An arc welding device that comprises:
a welding power source (2) for supplying power between a welding wire (6) fed to a welding torch (11) and a base metal (5) with a groove (5a);
a welding robot (1) for moving and weaving the welding torch (11) along the groove (5a), that causes a tip end portion of the welding wire (6) to progress into a recessed molten part (7) formed on the base metal (5) to weld the base metal (5); and
an arc sensor (3) for detecting an amount of offset of a central position for welding from a position of the groove (5a) based on welding current, and **characterised in that** the arc welding device comprises:
a transition control unit that temporarily makes a transition to a non-buried state where the tip end portion of the welding wire (6) does not progress into the recessed molten part (7) for a predetermined time period that allows the tip end portion of the welding wire (6) to traverse the groove (5a) by weaving of the welding torch (11);
an acquisition unit that acquires, from the arc sensor (3), a detection result of the amount of the offset at least in the non-buried state; and
a correction control unit that corrects a position of the welding torch (11) relative to the groove (5a) based on the detection result by the arc sensor (3) in the non-buried state.

2. The arc welding device according to claim 1, wherein a transition to the non-buried state is made by raising set voltage of the welding power source (2).

3. The arc welding device according to claim 1 or 2, wherein a transition to the non-buried state is made by moving the welding torch (11) in a direction in which the welding torch (11) is away from the base metal (5).

4. The arc welding device according to any one of claims 1 to 3, wherein a transition to the non-buried state is made by varying a moving speed of the welding torch (11) moving along the groove (5a).

5. The arc welding device according to any one of claims 1 to 4, wherein
a transition to the non-buried state is made by varying a feed speed of the welding wire (6).

6. The arc welding device according to any one of claims 1 to 5, wherein a position of the welding torch (11) relative to the groove (5a) is corrected during a period of a transition to the non-buried state based on a detection result by the arc sensor (3), and a position of the welding torch (11) is not corrected during a period other than the non-buried state.

7. An arc welding method controlling operation of an arc welding device that comprises:
a welding power source (2) for supplying power between a welding wire (6) fed to a welding torch (11) and a base metal (5) with a groove (5a); and
a welding robot (1) for moving and weaving the welding torch (11) along the groove (5a);
the method comprising:
moving and weaving the welding torch (11) along the groove (5a) by the welding robot (1) to cause a tip end portion of the welding wire (6) to progress into a recessed molten part (7) formed on the base metal (5) to weld the base metal (5),
the method being **characterised by**:
temporarily making a transition to a non-buried state where the tip end portion of the welding wire (6) does not progress into the recessed molten part (7) for a predetermined time period that allows the tip end portion of the welding wire (6) to traverse the groove (5a) by weaving of the welding torch (11);
acquiring, from an arc sensor (3) detecting an amount of offset of a central position for welding from a position of the groove (5a) based on welding current, a detection result of the amount of the offset at least in the non-buried state; and
correcting a position of the welding torch (11) relative to the groove (5a) based on the detection result by the arc sensor (3) in the non-buried state.

## Patentansprüche

1. Eine Lichtbogenschweißvorrichtung, wobei die Vorrichtung Folgendes aufweist:
eine Schweißstromquelle (2) zum Zuführen von Strom zwischen einem Schweißdraht (6), der einem Schweißbrenner (11) zugeführt wird, und einem Grundmetall (5) mit einer Nut (5a);
einen Schweißroboter (1) zum Bewegen und Pendeln des Schweißbrenners (11) entlang der Nut (5a), der bewirkt, dass ein Spitzenendabschnitt des Schweißdrahtes (6) in einen vertieften geschmolzenen Teil (7), der auf dem Basismetall (5) ausgebildet ist, vordringt, um das Basismetall (5) zu schweißen; und
einen Lichtbogensensor (3) zum Erfassen eines Versatzes einer zentralen Position zum Schweißen von einer Position der Nut (5a) basierend auf dem Schweißstrom,
und **gekennzeichnet dadurch, dass** die Lichtbogenschweißvorrichtung Folgendes aufweist:
eine Übergangssteuereinheit, die vorübergehend einen Übergang in einen nicht-eingebetteten Zustand herstellt, in dem der Spitzenendabschnitt des Schweißdrahtes (6) für eine vorbestimmte Zeitspanne nicht in den vertieften geschmolzenen Teil (7) vordringt, was es dem Spitzenendabschnitt des Schweißdrahtes (6) ermöglicht, die Nut (5a) durch Pendeln des Schweißbrenners (11) zu durchqueren;
eine Erfassungseinheit, die, von dem Lichtbogensensor (3), ein Erfassungsergebnis des Betrags des Versatzes zumindest in dem nicht-eingebetteten Zustand erfasst; und
eine Korrektursteuereinheit, die eine Position des Schweißbrenners (11) relativ zu der Nut (5a) auf der Grundlage des Erfassungsergebnisses durch den Lichtbogensensor (3) in dem nicht-eingebetteten Zustand korrigiert.

2. Lichtbogenschweißvorrichtung nach Anspruch 1, wobei ein Übergang in den nicht-eingebetteten Zustand durch Anheben der eingestellten Spannung der Schweißstromquelle (2) erfolgt.

3. Lichtbogenschweißvorrichtung nach Anspruch 1 oder 2, wobei ein Übergang in den nicht-eingebetteten Zustand durch Bewegen des Schweißbrenners (11) in eine Richtung erfolgt, in der sich der Schweißbrenner (11) vom Grundmetall (5) entfernt.

4. Lichtbogenschweißvorrichtung nach einem der Ansprüche 1 bis 3, wobei ein Übergang in den nicht-eingebetteten Zustand durch Änderung der Bewegungsgeschwindigkeit des Schweißbrenners (11) erfolgt, der sich entlang der Nut (5a) bewegt.

5. Lichtbogenschweißvorrichtung nach einem der Ansprüche 1 bis 4, wobei
ein Übergang in den nicht-eingebetteten Zustand durch Veränderung der Vorschubgeschwindigkeit des Schweißdrahtes (6) erfolgt.

6. Lichtbogenschweißvorrichtung nach einem der Ansprüche 1 bis 5, wobei eine Position des Schweißbrenners (11) relativ zur Nut (5a) während einer Periode eines Übergangs in den nicht-eingebetteten Zustand auf der Grundlage eines Erfassungsergebnisses durch den Lichtbogensensor (3) korrigiert wird und eine Position des Schweißbrenners (11) während einer anderen Periode als dem nicht-eingebetteten Zustand nicht korrigiert wird.

7. Verfahren zum Lichtbogenschweißen, das den Betrieb einer Lichtbogenschweißvorrichtung steuert, die Folgendes aufweist:
eine Schweißstromquelle (2) zum Zuführen von Strom zwischen einem Schweißdraht (6), der einem Schweißbrenner (11) zugeführt wird, und einem Grundmetall (5) mit einer Nut (5a); und
einen Schweißroboter (1) zum Bewegen und Pendeln des Schweißbrenners (11) entlang der Nut (5a);
wobei das Verfahren Folgendes aufweist:
Bewegen und Pendeln des Schweißbrenners (11) entlang der Nut (5a) durch den Schweißroboter (1), um zu bewirken, dass ein Spitzenendabschnitt des Schweißdrahtes (6) in einen vertieften geschmolzenen Teil (7), der auf dem Grundmetall (5) ausgebildet ist, eindringt, um das Grundmetall (5) zu schweißen;
wobei das Verfahren **gekennzeichnet ist durch**:
vorübergehendes Herstellen eines Übergangs zu einem nicht-eingebetteten Zustand, in dem der Spitzenendabschnitt des Schweißdrahtes (6) für eine vorbestimmte Zeitspanne, die es dem Spitzenendabschnitt des Schweißdrahtes (6) ermöglicht, die Nut (5a) **durch** Weben des Schweißbrenners (11) zu durchqueren, nicht in den vertieften geschmolzenen Teil (7) vordringt;
Erfassen, von einem Lichtbogensensor (3), der einen Betrag des Versatzes einer zentralen Position zum Schweißen von einer Position der Nut (5a) auf der Grundlage des Schweißstroms erfasst, eines Erfassungsergebnisses des Betrags des Versatzes zumindest in dem nicht-eingebetteten Zustand; und
Korrigieren einer Position des Schweißbrenners (11) relativ zu der Nut (5a) auf der Grundlage des Erfassungsergebnisses **durch** den Lichtbogensensor (3) in dem nicht-eingebetteten Zustand.

## Revendications

1. Dispositif de soudage à l'arc qui comprend :
une source d'alimentation de soudage (2) destinée à fournir de l'énergie entre un fil de soudage (6) fourni à une torche de soudage (11) et un métal de base (5) avec une rainure (5a) ;
un robot de soudage (1) destiné à déplacer et tresser la torche de soudage (11) le long de la rainure (5a), ce qui amène une partie d'extrémité en pointe du fil de soudage (6) à se déplacer dans une partie fondue en retrait (7) formée sur le métal de base (5) pour souder le métal de base (5), et un capteur d'arc (3) destiné à détecter une quantité de décalage d'une position centrale de soudage par rapport à une position de la rainure (5a) sur la base d'un courant de soudage,
et **caractérisé en ce que** le dispositif de soudage à l'arc comprend :
une unité de commande de transition qui effectue temporairement une transition vers un état non enfoui où la partie d'extrémité en pointe du fil de soudage (6) ne se déplace pas dans la partie fondue en retrait (7) pendant une période de temps prédéterminée ce qui permet à la partie d'extrémité en pointe du fil de soudage (6) de traverser la rainure (5a) en tissant la torche de soudage (11) ;
une unité d'acquisition qui acquiert, à partir du capteur d'arc (3) un résultat de détection de la quantité de décalage au moins à l'état non enterré ; et
une unité de commande de correction qui corrige une position de la torche de soudage (11) par rapport à la rainure (5a) sur la base du résultat de détection par le capteur d'arc (3) à l'état non enterré.

2. Dispositif de soudage à l'arc selon la revendication 1, dans lequel une transition vers l'état non enterré est effectuée en élevant une tension de consigne de la source d'alimentation de soudage (2).

3. Dispositif de soudage à l'arc selon la revendication 1 ou 2, dans lequel une transition vers l'état non enterré est effectuée en déplaçant la torche de soudage (11) dans une direction dans laquelle la torche de soudage (11) est éloignée du métal de base (5).

4. Dispositif de soudage à l'arc selon la revendication 1 ou 2, dans lequel une transition vers l'état non enterré est effectuée en modifiant une vitesse de déplacement de la torche de soudage (11) se déplaçant le long de la rainure (5a).

5. Dispositif de soudage à l'arc selon l'une quelconque des revendications 1 à 4, dans lequel
une transition vers l'état non enterré est effectuée en modifiant une vitesse d'alimentation du fil de soudage (6).

6. Dispositif de soudage à l'arc selon l'une quelconque des revendications 1 à 5, dans lequel une position de la torche de soudage (11) par rapport à la rainure (5a) est corrigée pendant une période de transition vers l'état non enterré sur la base d'un résultat de détection par le capteur d'arc (3), et une position de la torche de soudage (11) n'est pas corrigée pendant une période autre que l'état non enterré.

7. Procédé de soudage à l'arc contrôlant le fonctionnement d'un dispositif de soudage à l'arc qui comprend :
une source d'alimentation de soudage (2) destinée à fournir de l'énergie entre un fil de soudage (6) fourni à une torche de soudage (11) et un métal de base (5) avec une rainure (5a) ; et
un robot de soudage (1) destiné à déplacer et tisser la torche de soudage (11) le long de la rainure (5a) ;
le procédé comprenant :
le déplacement et le tressage de la torche de soudage (11) le long de la rainure (5a) par le robot de soudage (1) pour amener une partie d'extrémité en pointe du fil de soudage (6) à avancer dans une partie fondue en retrait (7) formée sur le métal de base (5) pour souder le métal de base (5) ;
le procédé étant **caractérisé par** :
l'exécution temporaire d'une transition vers un état non enfoui où la partie d'extrémité en pointe du fil de soudage (6) ne progresse pas dans la partie fondue en retrait (7) pendant une période de temps prédéterminée ce qui permet à la partie d'extrémité en pointe du fil de soudage (6) de traverser la rainure (5a) en tressant la torche de soudage (11) ;
l'acquisition, à partir d'un capteur d'arc (3) détectant une quantité de décalage d'une position centrale pour le soudage par rapport à une position de la rainure (5a) sur la base d'un courant de soudage, d'un résultat de détection de la quantité du décalage au moins dans l'état non enterré ; et
la correction d'une position de la torche de soudage (11) par rapport à la rainure (5a) sur la base du résultat de détection par le capteur d'arc (3) dans l'état non enterré.
